# EUROPEAN PATENT SPECIFICATION

(11) **EP 1 525 035 B1**
(45) Date of publication and mention of the grant of the patent: **21.05.2008**
(21) Application number: 03740818.4
(22) Date of filing: 16.07.2003
(51) Int. Cl.: A63B 55/08, B62B 5/00

(54) **GOLF TROLLEY**
GOLFWAGEN
CHARIOT DE GOLF

(30) Priority: 25.07.2002 GB 0217279
(43) Date of publication of application: 27.04.2005
(73) Proprietor: Modrec International (Holdings) Ltd, North Shields, Tyne and Wear NE29 7HA (GB)
(72) Inventor: HEMINGWAY, Mark, Middlesbrough, Cleveland TS15 9UJ (GB)
(74) Representative: Watson, Robert James
(86) International application number: PCT/GB2003/003110
(87) International publication number: WO 2004/011105

(56) References cited:
- DE-A- 3 923 809
- FR-A- 2 733 187

## Description

### TECHNICAL FIELD

This invention relates to golf trolleys, and more particularly to electrically powered golf trolleys.

### BACKGROUND

Electrically powered golf trolleys conventionally include a battery mounted on the frame of the trolley and selectively operable to drive the trolley through an associated motor and drive shaft.

Most established trolleys use lead acid batteries which are bulky, heavy and cumbersome, require regular charging, and are unable to retain their charge for significant periods of time.

Nickel cadmium batteries are a relatively recent alternative to lead acid batteries. However, although they retain their charge for extended periods of time, they take a long time to charge and are still relatively bulky.

Invariably the batteries are mounted on associated support means on the frame of the trolley, and it is usually necessary to remove the battery from the trolley prior to disassembling or folding the trolley for storage or transportation purposes.

All conventional batteries pose a problem to the environment when it comes to disposal.

DE3923809 A1 discloses a battery-powered golf trolley that is foldable and has a removable drive shaft.

FR2733187 A1 describes motorised carts, particularly golf carts. One embodiment discloses a structure for mounting batteries in which the batteries are held in a hollow portion of the centre frame section of the cart.

### SUMMARY OF THE INVENTION

It would be desirable to be able to provide an electrically powered golf trolley the battery of which overcame the aforementioned problems of the prior art.

According to the present invention there is provided an electrically powered golf trolley according to claim 1.

It will be appreciated that such a trolley can be much more compact than heretofore, having the general visual characteristics of a manual trolley, and can be folded more readily than established trolleys without the requirement to remove the battery, which can be charged in situ if desired.

A preferred battery comprises a plurality of power cells, for example nickel metal hydride cells, contained in a housing the configuration of which matches that of the frame, conveniently being of oval cross-section.

### BRIEF DESCRIPTION OF THE DRAWINGS

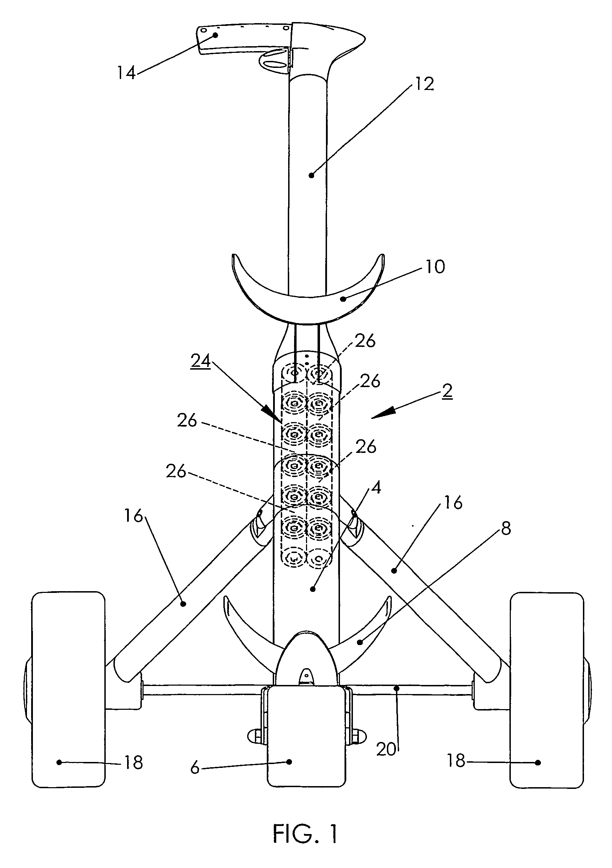

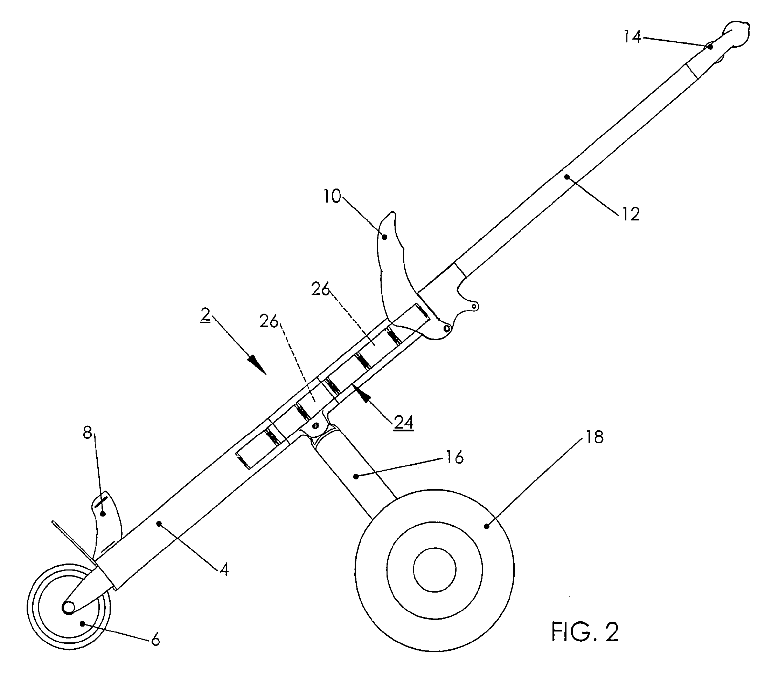

Figs. 1 and 2 are a front view and a side view respectively of the trolley according to the invention, and
Fig. 3 is an isometric view of a trolley according to the invention showing the drive motor.

### DESCRIPTION OF THE PREFERRED EMBODIMENTS

Referring to the drawings, the illustrated trolley comprises a frame having an elongate central body member 2 of hollow oval cross-section, the body member 2 including a lower extent 4 to the bottom end of which is mounted a nose wheel 6, a pair of spaced apart bag supports 8,10 being mounted adjacent the top and bottom ends of the extent 4.

The body member 2 further includes an upper extent 12 the lower end of which is pivotally mounted to the upper end of the extent 4, and the upper end of which comprises a handle 14.

The upper extent 12 can be pivoted from the illustrated operative condition forming a rigid extension of the extent 4 to a folded or storage condition lying adjacent and parallel to the lower extent 4.

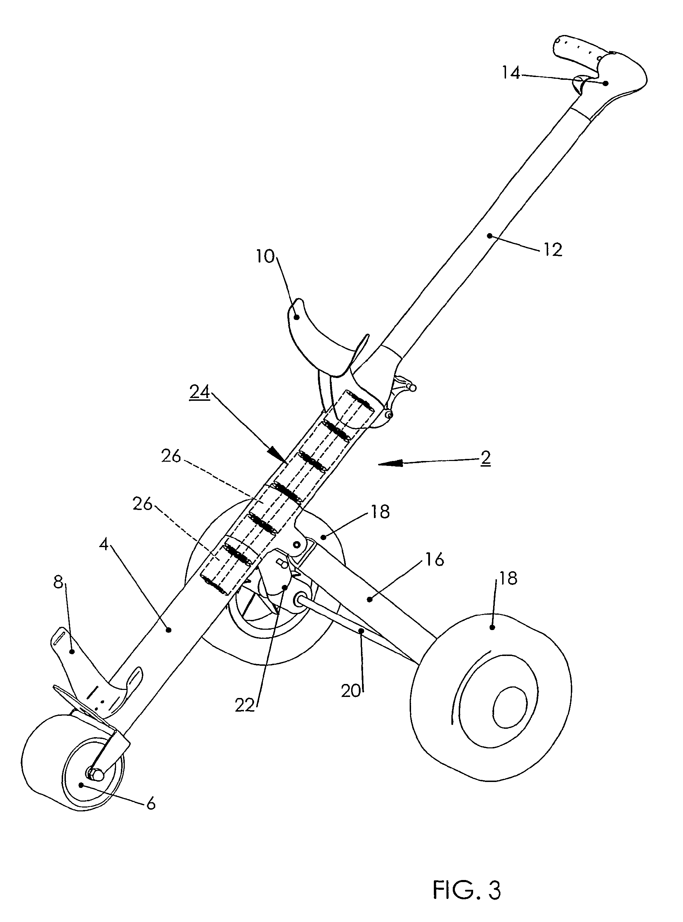

A pair of leg members 16 are pivotally mounted one to each side of the central regions of the lower extent 4 of the body member 2, the free ends of the leg members 16 carrying opposed wheels 18 between which extends a drive shaft 20 driven by a motor 22 (Fig. 3).

The primary novelty of the trolley of the invention lies in the means by which the motor 22 is powered. These means comprise a battery indicated generally at 24 and shown in dotted outline in the drawings. In the illustrated embodiment, the battery 24 comprises 12 cells 26 contained within an outer housing of oval cross section the shape of which is such as to be a close sliding fit in the upper regions of the hollow interior of the lower extent 4 of the body member 2. The cells 26 are nickel metal hydride, enabling the battery to be relatively compact and to be charged relative quickly, although other batteries could be used.

An electric contact element (not shown) provided in the lower end of the upper extent 12 of the body member 2 engages the battery 24 to complete an electric circuit including the motor 22 the condition of which circuit is under the control of an on-off switch and variable speed control contained in the handle 14.

It will be appreciated that the location of the battery 24 within the frame of the trolley, which is conveniently made from extruded brushed aluminium tube of oval cross-section bonded to aluminium castings, results in a trolley having the visual characteristics of a manual trolley and being able to fold more compactly than conventional electric trolleys without the requirement to remove the battery 24.

The battery 24 may be charged whilst still contained within the frame of the trolley with the upper extent 12 of the body member 2 in its folded or storage condition, there being good heat dissipation through the metal of the frame, while the provision of the contact element in the lower end of the upper extent 12 of the body member 2 ensures that, with the body member 2 in its rigid, operative condition, the battery 24 is always in-circuit for powering the motor 22, and, with the body member 2 in its folded or storage condition, the battery 24 is disconnected from the circuit.

Clearly the configurations of the body member 2 and the battery 24 may be other than of oval cross-section, and may differ one from the other, providing the battery 24 can be housed within the body member, conveniently the lower extent 4, but alternatively the upper extent 12.

In an alternative embodiment, the battery 24 may be housed other than in the body member 2, for example in the leg members 16. Other modifications and variations will be apparent to those skilled in the art.

## Claims

1. An electrically powered golf trolley comprising a frame including an elongate body member (2) and a pair of opposed leg members (16) one end of each of which is mounted to the body member (2) and between the other ends of which is mounted a drive system including a pair of wheels (18) and a drive shaft (20), the trolley further comprising a battery (24) for powering the drive system, **characterised in that** the elongate body member (2) of the frame comprising upper and lower extents (12,4) pivotally connected to one another to enable movement between an operative condition in which the upper extent (12) forms a continuation of the lower extent (4), and a storage condition in which the upper extent (12) lies adjacent to and substantially parallel with, the lower extent (4) at least the upper regions of the lower extent (4) of the elongate body member (2) are hollow and have the battery (24) and the lower end of the upper extent (12) of the body member (2) comprises an electrical contact arranged to engage the battery (24) in the operative condition of the body member (2) and to disengage from the battery (24) in the storage condition of the body member (2).

2. A golf trolley as claimed in claim 1 in which the battery (24) comprises a plurality of power cells (26) contained in a housing the configuration of which matches that of the frame.

3. A golf trolley as claimed in claim 2 in which the power cells are nickel metal hydride cells.

4. A golf trolley as claimed in claim 2 or claim 3 in which the housing of the battery (24) and the part of the frame in which the battery is housed are of oval cross-section.

## Patentansprüche

1. Elektrisch betriebener Golf-Trolley, umfassend einen Rahmen, der ein längliches Körperelement (2) und ein Paar einander gegenüberliegender Beinelemente (16) beinhaltet, deren jeweils eines Ende auf dem Körperelement (2) angebracht ist, und zwischen deren anderen Enden ein Antriebssystem mit einem Paar Rädern (18) und einer Antriebswelle (20) angebracht ist, wobei der Trolley ferner eine Batterie (24) zum Antreiben des Antriebssystems umfasst, **dadurch gekennzeichnet, dass** das längliche Körperelement (2) des Rahmens obere und untere Erstreckungen (12, 4) umfasst, die schwenkbar miteinander verbunden sind, um eine Bewegung zwischen einem Betriebszustand, in welchem die obere Erstreckung (12) eine Verlängerung der unteren Erstreckung (4) bildet, und einem Aufbewahrungszustand, in welchem die obere Erstreckung (12) benachbart zur unteren Erstreckung (4) und im Wesentlichen parallel zu dieser liegt, zu ermöglichen, wobei zumindest die oberen Bereiche der unteren Erstreckung (4) des länglichen Körperelements (2) hohl sind und die Batterie aufnehmen (24) und das untere Ende der oberen Erstreckung (12) des Körperelements (2) einen elektrischen Kontakt umfasst, der angeordnet ist, um im Betriebszustand des Körperelements (2) die Batterie (24) in Wirkeingriff zu bringen und im Aufbewahrungszustand des Körperelements (2) die Batterie (24) aus dem Wirkeingriff zu lösen.

2. Golf-Trolley nach Anspruch 1, worin die Batterie (24) eine Vielzahl an in einem Gehäuse untergebrachten Leistungs-Batteriezellen (26) umfasst, deren Anordnung jener des Rahmens angepasst ist.

3. Golf-Trolley nach Anspruch 2, worin die Leistungs-Batteriezellen Nickelmetallhydridzellen sind.

4. Golf-Trolley nach Anspruch 2 oder 3, worin das Gehäuse der Batterie (24) und jener Teil des Rahmens, in dem die Batterie untergebracht ist, einen ovalen Querschnitt aufweisen.

## Revendications

1. Chariot de golf alimenté électriquement comprenant un cadre incluant un élément de corps oblong (2) et deux éléments de branche opposés (16), dont une extrémité de chacun est montée sur l'élément de corps (2), et entre les autres extrémités de ceux-ci est monté un système d'entraînement incluant une paire de roues (18) et un arbre d'entraînement (20), le chariot comprenant en outre une batterie (24) pour alimenter le système d'entraînement, **caractérisé en ce que** l'élément de corps oblong (2) du cadre comprenant des extensions supérieure et inférieure (12,4) reliées d'une manière pivotante l'une à l'autre pour permettre un mouvement entre un état fonctionnel dans lequel l'étendue supérieure (12) forme une continuation de l'étendue inférieure (4), et un état de stockage dans lequel l'étendue supérieure (12) est adjacente à et sensiblement parallèle avec l'étendue inférieure (4), au moins les régions supérieure de l'étendue inférieure (4) de l'élément de corps oblong (2) sont creuses et ont la batterie (24), et l'extrémité inférieure de l'étendue supérieure (12) de l'élément de corps (2) comprend un contact électrique agencé pour venir en prise avec la batterie (24) à l'état fonctionnel de l'élément de corps (2) et à sortir de prise avec la batterie (24) à l'état de stockage de l'élément de corps (2).

2. Chariot de golf selon la revendication 1, où la batterie (24) comprend plusieurs cellules de puissance (26) se trouvant dans un boîtier, dont la configuration correspond à celle du cadre.

3. Chariot de golf selon la revendication 2, où les cellules de puissance sont des batteries au nickel-métal-hydrure.

4. Chariot de golf selon la revendication 2 ou la revendication 3, où le boîtier de la batterie (24) et la partie du cadre dans laquelle la batterie est logée ont une section transversale ovale.
